# EUROPEAN PATENT APPLICATION

(11) **EP 2 312 860 A2**
(43) Date of publication of application: **20.04.2011**
(21) Application number: 10157625.4
(22) Date of filing: 24.03.2010
(51) Int. Cl.: H04N 13/00

(54) **Stereoscopic image providing method, apparatus and system**

(30) Priority: 14.10.2009 KR 20090097615
(71) Applicant: SAMSUNG ELECTRONICS CO., LTD., Suwon-si, Gyeonggi-do (KR)
(72) Inventor: Jung, You-young, Gyeonggi-do (KR); Chun, Kang-wook, Gyeonggi-do (KR)
(74) Representative: Walaski, Jan Filip

(57) **Abstract**

A stereoscopic image providing method comprises receiving a combined image, which comprises a left image and a right image compressed in a predetermined direction and multiplexed, decompressing the combined image, demultiplexing the decompressed combined image, and restoring the demultiplexed images into the left image and the right image.

## Description

Exemplary embodiments relate to an image providing method, and an image providing apparatus, a display apparatus, and an image providing system using the same, and aspects may more particularly relate to an image providing method which provides a user with images received through a plurality of channels, and an image providing apparatus, a display apparatus, and an image providing system using the same.

Three dimensional (3D) image display technology is used in a wide variety of fields, including communications, broadcasting, medical services, education, the military, computer games, computer animation, virtual reality, computer-aided design (CAD), industrial technology, and the like, and is important in current development for the next generation of information communication, for which there is currently a highly competitive development environment.

A person perceives a 3D effect due to various reasons, including variations in the thickness of the lenses of his or her eyes, the angle between each of his or her eyes and the subject, the position of the subject as viewed through both eyes, parallax caused by the motion of the subject, and psychological effects.

Binocular disparity, which refers to differences between the images of an object as seen by the left and right eyes due to the horizontal separation of the eyes by about 6 to 7 cm, is an important factor in producing a three-dimensional perception. The left and right eyes see different two dimensional images which are transmitted to the brain through the retina. The brain fuses these two different images with great accuracy to reproduce the sense of a three-dimensional image.

3D image display apparatuses may be divided into glass type and non-glass type apparatuses. Glass type apparatuses include a color filter type apparatus which filters an image using a color filter including complementary color filter segments, a polarizing filter type apparatus which divides an image into a left eye image and a right eye image using a shading effect caused by a polarized light element, the directions of which are orthogonal to each other, and a shutter glass type apparatus which blocks a left eye and right eye alternately to correspond to a synchronization signal.

Shutter glass type apparatuses use different perspectives for each eye, which provides an image on the display device while turning each eye on or off, so that the user preceives a sense of a space from the image viewed at different angles.

However, since the display apparartus needs to alternately display a left eye image and a right eye image to provide a user with the 3D image, two decoders to decode compressed left and right eye images, respectively, are required.

Therefore, the cost for manufacturing a display apparatus may be increased, and the volume and weight of the display apparatus may also increase, which is not in accordance with a current trend to minimize the size and lighten the weight of display parts.

Exemplary embodiments may address at least the above problems and/or disadvantages and other disadvantages not described above. Also, exemplary embodiments are not required to overcome the disadvantages described above, and an exemplary embodiment may not overcome any of the problems described above.

Aspects of exemplary embodiments may provide an image providing method which enables a user to view images of two channels, and an image providing apparatus, a display apparatus, and an image providing system using the same.

Another aspect of an exemplary embodiment, may provide an image providing method, including receiving a combined image of which a first image and a second image are compressed in a predetermined direction, and are demultiplexed; decompressing the combined image; demultiplexing the decompressed image, and restoring the demultiplexed image into the first image and the second image; and outputting the restored first and second images alternately.

The combined image may be generated by the process that the first image and the second image are compressed in a horizontal direction, and then multiplexed; and the decompressing decompresses the combined image in the horizontal direction.

The first image may include one of a left eye image and a right eye image; the second image may include another of the left eye image and the right eye image; and the outputting may be synchronized with the time at which a left eye glass and a right eye glass of shutter glasses are alternately opened and closed, and outputs the restored left and right eye images alternately.

The decompressing may decompress the combined image using a function block for decompression; and the restoring may demultiplex the decompressed image using a function block for demultiplexing.

Another aspect of an exemplary embodiment may provide an image providing method, including receiving compressed images of two channels; decompressing the compressed images of two channels; splitting the decompressed images of two channels into an image of a first channel and an image of a second channel; and outputting the image of the first channel and the image of the second channel alternately.

Another aspect of an exemplary embodiment may provide an image providing apparatus, including a receiver which receives a combined image of which a first image and a second image are compressed in a predetermined direction, and are multiplexed; a decompressor which decompresses the combined image; a demultiplexer which demultiplexes the decompressed image, and restores the demultiplexed image to the first image and the second image; and a controller which outputs the restored first and second images alternately.

The combined image may be generated by the process that the first image and the second image are compressed in a horizontal direction, and then multiplexed; and the decompressor may decompress the combined image in the horizontal direction.

The first image may include one of a left eye image and a right eye image; the second image may include another of the left eye image and the right eye image; and the controller may synchronize a timing of opening and closing a left eye glass and a right eye glass of shutter glasses with a timing of outputting the left eye image and the right eye image, and output the restored left and right eye images alternately.

The decompressor and the demultiplexer may be configured as a single function block, respectively.

Another aspect of an exemplary embodiment may provide a display apparatus, including a receiver which receives compressed images of two channels; a controller which decompresses the compressed images of two channels, and splits the decompressed image into an image of a first channel and an image of a second channel; and a display which outputs the image of the first channel and the image of the second channel alternately.

The display apparatus may further include a decoder which decompresses the compressed images of the two channels; and a demultiplexer which splits the decompressed images into the image of the first channel and the image of the second channel.

The compressed images of the two channels may be generated by the process that the image of the first channel and the image of the second channel are compressed, respectively, and then the compressed images may be multiplexed.

Another aspect of an exemplary embodiment may provide an image providing system, including an image generating apparatus which compresses a first image and a second image in a predetermined direction, generates a combined image by multiplexing the compressed images, and transmits the combined image to the outside; an image providing apparatus which receives the combined image from the image generating apparatus, decompresses the combined image, restores the decompressed image into a first image and a second image by demultiplexing the decompressed image, and outputs the first image and the second image alternately; and shutter glasses which are synchronized with the time at which the first image and the second image restored by the image providing apparatus are alternately output, and open and close a left eye glass and a right eye glass alternately.

The above and/or other aspects will be more apparent by describing certain exemplary embodiments with reference to the accompanying drawings, in which:
FIG. 1 is a view illustrating an exemplary image providing system which provides a three dimensional (3D) stereographic image;
FIG. 2 is a block diagram illustrating an exemplary image generating apparatus according to an exemplary embodiment;
FIG. 3 illustrates views in which images are generated and processed on each function block of an exemplary image generating apparatus;
FIG. 4 is a block diagram illustrating an exemplary display apparatus according to an exemplary embodiment;
FIG. 5 illustrates views in which images are generated and processed on each function block of an exemplary display apparatus;
FIG. 6 is a block diagram illustrating exemplary shutter glasses according to an exemplary embodiment; and
FIG. 7 is a flowchart provided to explain an exemplary image providing method according to an exemplary embodiment.

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the aspects of exemplary embodiments. Thus, it is apparent that embodiments may be carried out without those specifically defined matters. Also, well-known functions or constructions may not be described in detail since they may obscure aspects with unnecessary detail. The size, scale, and proportions of some elements may be exaggerated or skewed in the drawings for clarity and convenience.

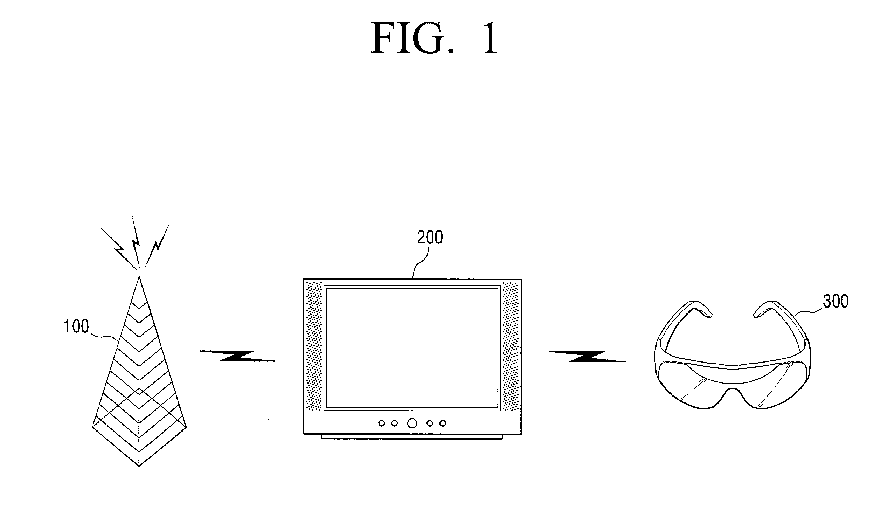

FIG. 1 is a view illustrating an exemplary image providing system which provides a three dimensional (3D) stereographic image. Referring to FIG. 1, the exemplary image providing system comprises an image generating apparatus 100 which generates and transmits a 3D image, a display apparatus 200 which provides a user with a 3D image, and shutter glasses 300 which enable a user to view and perceive a 3D image.

The image generating apparatus 100 is used by a government-run, a privatized, or a private broadcasting station to generate broadcasting. The image generating apparatus 100 generates an image combining a left eye image and a right eye image, and transmits the combined image to the display apparatus 200. While the display apparatus 200 in FIG. is illustrated as a television (TV) the display apparatus 200 may be embodied in other formats, such a portable media player, a notebook or netbook computer, and an indoor or outdoor large format display, for example.

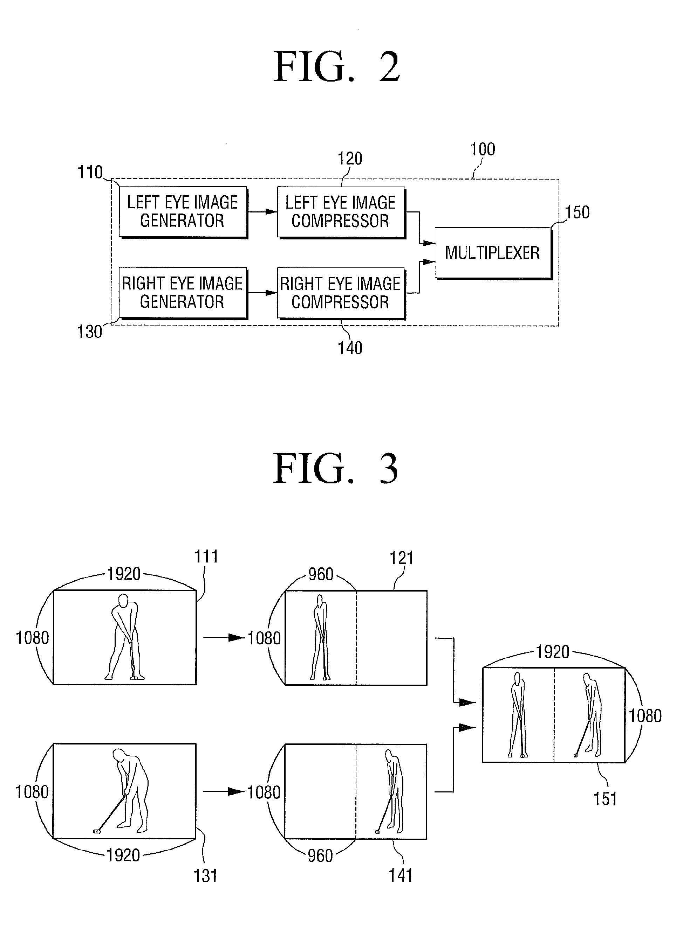

Such an exemplary image generating apparatus 100 is illustrated in FIGS. 2 and 3.

FIG. 2 is a block diagram illustrating the exemplary image generating apparatus 100 according to an exemplary embodiment, and FIG. 3 illustrates views in which images are generated and processed on each function block of the exemplary image generating apparatus 100.

The image generating apparatus 100 comprises a left eye image generator 110, a left eye image compressor 120, a right eye image generator 130, a right eye image compressor 140, and a multiplexer 150.

The left eye image generator 110 may generate a left eye image as an image of a first channel, and the right eye image generator 120 may generate a right eye image as an image of a second channel.

As described above, the left eye image and the right eye image may be alternately provided to a user at short intervals, and thus the user may perceive a 3D effect of combining the left eye image with the right eye image by apparent binocular disparity.

To do so, the left eye image generator 110 and the right eye image generator 130 generate a left eye image and a right eye image, respectively, and the user perceives the 3D effect created by the combination of the left eye image and the right eye image.

An example of the above process is illustrated as reference numbers 111 and 131 in FIG. 3. Reference number 111 represents a left eye image 111 which is generated by the left eye image generator 110, and reference number 131 represents a right eye image 131 which is generated by the right eye image generator 130.

The left eye image generator 110 transmits the generated left eye image 111 to the left eye image compressor 120, and the right eye image generator 130 transmits the generated right eye image 131 to the right eye image compressor 140.

The left eye image compressor 120 compresses the left eye image 111 received from the left eye image generator 110 horizontally, and the right eye image compressor 140 compresses the right eye image 131 received from the right eye image generator 130 horizontally.

The above process is illustrated as reference numbers 121 and 141 in FIG. 3. If, for example, the resolution of the left eye image is 1920 * 1080 pixels, the left eye image compressor 120 compresses the left eye image horizontally, and thus generates a compressed left eye image 121 having resolution of 960 * 1080 pixels. If, for example, the resolution of the right eye image is 1920 * 1080 pixels, the right eye image compressor 140 compresses the right eye image horizontally, and thus generates a compressed right eye image 141 having resolution of 960 * 1080 pixels.

The compressed left eye image 121 and the compressed right eye image 141 generated by the left image compressor 120 and the right eye image compressor 140 are transmitted to the multiplexer 150.

The multiplexer 150 combines the compressed left eye image 121 and the compressed right eye image 141 so that the images of two channels may be transmitted through a single channel. Specifically, the multiplexer 150 combines the images of two channels in the same horizontal direction that the left eye image compressor 120 and the right eye image compressor 140 have compressed the left eye image 111 and the right eye image 131, respectively.

Accordingly, a combined image 151 in which the compressed left eye image 121 is combined with the compressed right eye image 141 is generated as shown in FIG. 3, and the resulting resolution of the combined image 151 is 1920 * 1080 pixels, the resolution of the compressed left eye image 121 and the compressed right eye image 141 combined in a horizontal direction.

Referring again to FIG. 1, the image generating apparatus 100 may transmit the combined image 151 to the display apparatus 200.

The display apparatus 200 may have the ability to display a 3D image provided by a broadcasting station. Such a broadcasting station may include a terrestrial analog or digital broadcaster, a satellite or microwave broadcaster, cable television, or a transmission over a network, for example. The display apparatus 200 processes the combined image 151 transmitted from the image generating apparatus 100 to generate a 3D image that a user can view, and outputs the generated 3D image.

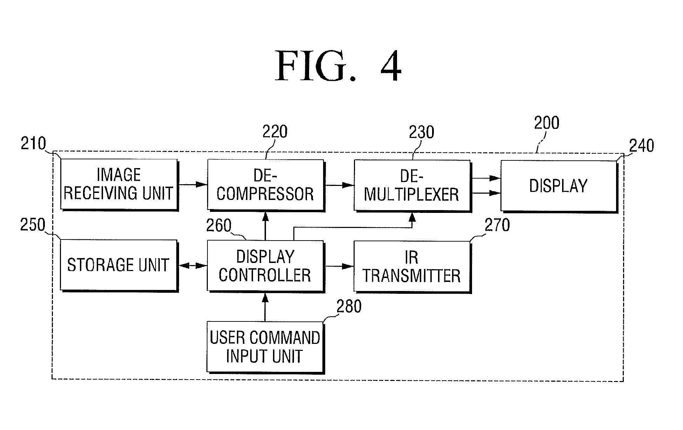

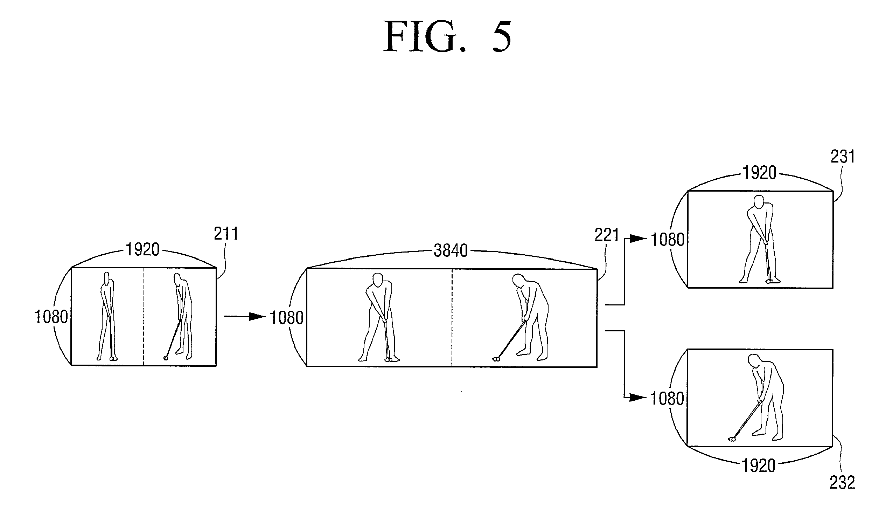

Such an exemplary display apparatus 200 is illustrated in FIGS. 4 and 5.

FIG. 4 is a block diagram illustrating the exemplary display apparatus 200 according to an exemplary embodiment, and FIG. 5 illustrates views in which images are generated and processed on each function block of the exemplary display apparatus 200.

Referring to FIG. 4, the display apparatus 200 comprises an image receiving unit 210, a decompressor 220, a demultiplexer 230, a display 240, a storage unit 250, a display controller 260, an Infrared Ray (IR) transmitter 270, and a user command input unit 280.

The image receiving unit 210 tunes to a broadcast which is provided by one of a plurality of broadcasting stations according to a user manipulation, and if a broadcast of a 3D image is tuned to, the image receiving unit 210 receives a combined image of two channels from the image generating apparatus 100 of a corresponding broadcasting station. The combined image received from the image generating apparatus 100 is illustrated as reference number 211 in FIG. 5. The combined image 211 received from the display apparatus 200 corresponds to the combined image 151 transmitted by the image generating apparatus 100, and will be referred to as the combined image 211 hereinafter.

The image receiving unit 210 transmits the combined image 211 to the decompressor 220.

The decompressor 220 decompresses the combined image 211. Specifically, the decompressor 220 horizontally decompresses the combined image 211 which has been compressed horizontally. Accordingly, for example, a combined image 211 having a resolution of 1920 * 1080 pixels is converted into a decompressed image 221 having resolution of 3840 * 1080 pixels.

The decompressor 220 transmits the decompressed image 221 having resolution of 3840 * 1080 pixels to the demultiplexer 230, and the demultiplexer 230 splits the decompressed image 221 into a left eye image and a right eye image, as the image 211 which is transmitted from the decompressor 220 to the demultiplexer 230 is decompressed but may not yet have been demultiplexed.

FIG. 5 illustrates exemplary views in which the demultiplexer 230 splits the decompressed image 221 into a left eye image 231 and a right eye image 232, and transmits the left eye image 231 and the right eye image 232 to the display 240, respectively. That is, the demultiplexer 230 splits the decompressed image 221 having, for example, a resolution of 3840 * 1080 pixels into the left eye image 231 having resolution of 1920 * 1080 pixels and the right eye image 232 having resolution of 1920 * 1080 pixels, and transmits the split images 231 and 232 to the display 240.

Specifically, the demultiplexer 230 transmits the left eye image 231 and the right eye image 232 alternately under the control of the display controller 260, and does not transmit the left eye image 231 and the right eye image 232 at the same time. Accordingly, a user wearing the shutter glasses 300 can view and perceive a 3D stereographic image.

As described above, the exemplary display apparatus 200 performs image processing such as decompressing and demultiplexing, and thus may be referred to as an image processing apparatus. In addition, the display apparatus 200 provides a user with a 3D stereographic image which is generated by image processing, and thus may be referred to as an image providing apparatus.

The display 240 outputs the left eye image and the right eye image which are alternately transmitted by the demultiplexer 230.

The storage unit 250 may store programs to execute overall operations of the display apparatus 200, and may be implemented using a hard disc drive (HDD), a memory, and so on.

The IR transmitter 270 generates an Infrared sync signal, and transmits the generated Infrared sync signal from the display apparatus 200. Accordingly, a left eye glass and a right eye glass of the shutter glasses 300 which a user is wearing may be alternately opened and closed based on the received sync signal, and thus the left eye image and the right eye image may be provided to a left eye and a right eye of the user, respectively. The Infrared sync signal may synchronize the timing of outputting the left and right eye images with the timing of opening and closing the left eye glass and the right eye glass of the shutter glasses 300. While IR transmitter 270 is exemplarily embodied using infrared transmission, alternate embodiments may use wired or wireless transmissions on alternate frequencies or wavelengths of the electromagnetic spectrum.

The user command input unit 280 receives a command to manipulate the display apparatus 200 from a user using a remote controller (not shown) that may be separate from or part of the shutter glasses 300, and transmits the command to the display controller 260. The display controller 260 may control operations of the display apparatus 200 in response to the received command.

The display controller 260 may control the decompressor 220 to decompress the combined image 211 received from the image receiver 210. The display controller 260 may control the demultiplexer 230 to split the decompressed image 221 into the left eye image 231 and the right eye image 232, and to alternately display the split images 231 and 232 on the display 240. The display controller 260 may transmit a sync signal through the IR transmitter 270 from the display apparatus 200.

Referring again to FIG. 1, the display apparatus 200 outputs the left eye image 231 and the right eye image 232, and transmits a sync signal to the shutter glasses 300.

The shutter glasses 300 receives the sync signal from the display apparatus 200, is synchronized with the timing of outputting the left eye image 231 and the right eye image 232 on the display apparatus 200, and opens and closes the left eye glass and the right eye glass, for example, alternately. Depending on a frame rate or other characteristics of the broadcast or characteristics of the display apparatus 200 such as refresh rate, the opening and closing of the left eye glass and right eye glass may not alternate, but may be in another predetermined sequence.

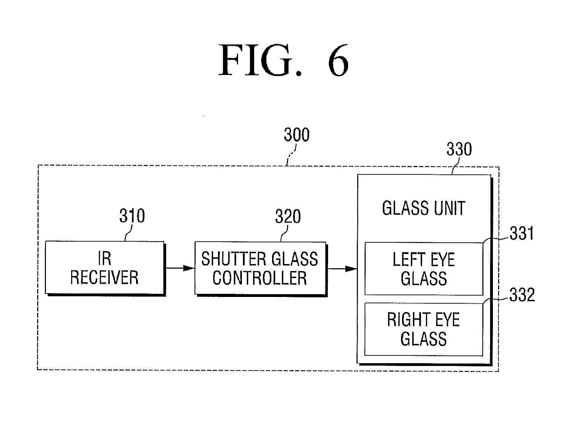

Such exemplary shutter glasses 300 are illustrated in FIG. 6.

FIG. 6 is a block diagram illustrating the exemplary shutter glasses 300 according to an exemplary embodiment.

The shutter glasses 300 may comprise an IR receiver 310, a shutter glass controller 320, and a glass unit 330.

The IR receiver 310 receives a sync signal of a 3D stereographic image from the IR transmitter 270 of the display apparatus 200. That is, the IR transmitter 270 radiates a sync signal using Infrared rays having directivity, and the IR receiver 310 receives the sync signal. The IR receiver 310 transmits the sync signal received from the IR transmitter 270 to the shutter glass controller 320.

The glass unit 330 comprises a left eye glass 331 which receives a left eye image and a right eye glass 332 which receives a right eye image. The left eye glass 331 is opened and the right eye glass 332 is closed at the time when the display apparatus 200 outputs a left eye image, and thus the left eye image is input to a user's eye through the left eye glass 331. The right eye glass 332 is opened and the left eye glass 331 is closed at the time when the display apparatus 200 outputs a right eye image, and thus the right eye image is input to a user's eye through the right eye glass 332.

The shutter glass controller 320 controls overall operations of the shutter glasses 300. Specifically, the controller 320 opens and closes the left eye glass 331 and the right eye glass 332 alternately based on the sync signal received from the IR receiver 310.

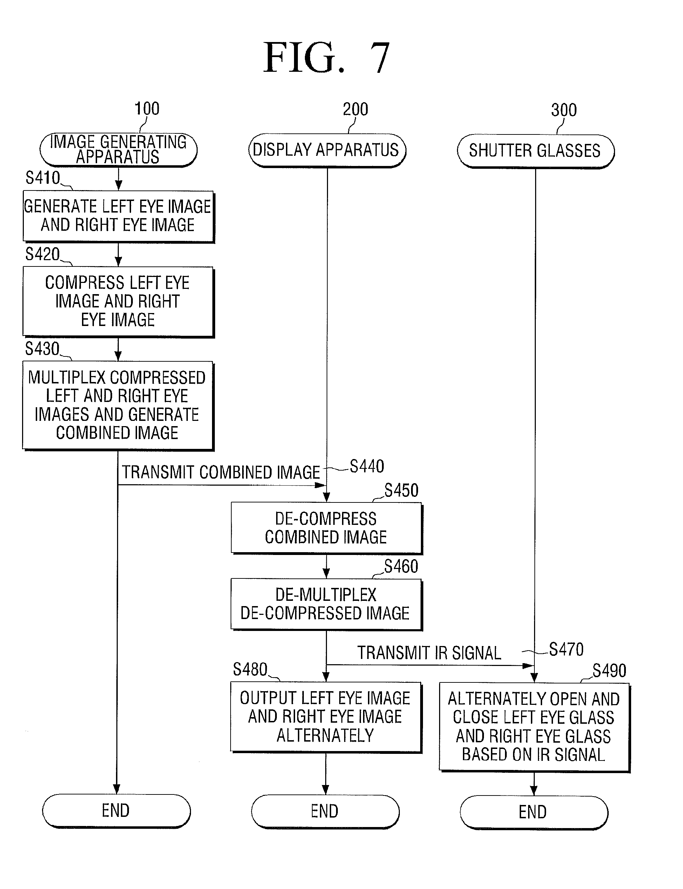

FIG. 7 is a flowchart provided to explain an exemplary image providing method according to an exemplary embodiment. The image generating apparatus 100 which is used by broadcasting stations generates a left eye image and a right eye image (S410), and compresses the left eye image and the right eye image (S420). In this situation, the images may be compressed horizontally as described above, but may also be compressed in other directions, for example, vertically.

The image generating apparatus 100 multiplexes the compressed left and right eye images and generates a combined image (S430), and transmits the combined image to the display apparatus 200 (S440).

The display apparatus 200 decompresses the combined image (S450), and demultiplexes the decompressed image (S460).

The display apparatus 200 alternately outputs a left eye image and a right eye image of the demultiplexed image on the display 240, and transmits an IR signal which is synchronized with the time at which the left and right eye images are respectively output to the shutter glasses 300.

The left eye glass and the right eye glass of the shutter glasses 300 are alternately opened and closed based on the IR signal, and thus the left eye image and the right eye image are alternately input to a left eye and a right eye of a user. Depending on a frame rate or other characteristics of the broadcast or characteristics of the display apparatus 200 such as refresh rate, the opening and closing of the left eye glass and right eye glass may not alternate, but may be in another predetermined sequence.

As described above, when images of two channels are received in a compressed and multiplexed format, the images are decompressed prior to being demultiplexed. To restore the images of two channels, only a single function block is required to decompress the images. Accordingly, the cost for manufacturing the display apparatus may be lowered, and the display apparatus may be lightened and miniaturized.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art. Additionally, expressions such as "at least one of", when preceding a list of elements, modify the entire list of elements and do not modify each element of the list.

## Claims

1. An image providing method, comprising:
receiving a combined image comprising a first image and a second image compressed in a predetermined direction and multiplexed;
decompressing the combined image;
demultiplexing the decompressed image, and restoring the demultiplexed image into the first image and the second image; and
outputting the first image and the second image alternately.

2. The image providing method as claimed in claim 1, wherein
the combined image is generated by compressing the first image and the second image in a horizontal direction, and multiplexing the compressed first image and compressed second image; and
the decompressing decompresses the combined image in the horizontal direction.

3. The image providing method as claimed in claim 1 or 2, wherein
the first image comprises one of a left eye image and a right eye image;
the second image comprises another of the left eye image and the right eye image; and
the outputting is synchronized with a time at which a left eye glass and a right eye glass of shutter glasses are alternately opened and closed, and outputs the demultiplexed left and right eye images alternately.

4. The image providing method as claimed in one of claims 1 to 3, wherein
the decompressing decompresses the combined image using a function block for decompression; and
the demultiplexing demultiplexes the decompressed image using a function block for demultiplexing.

5. An image providing apparatus, comprising:
a receiver which receives a combined image comprising a first image and a second image compressed in a predetermined direction and multiplexed;
a decompressor which decompresses the combined image;
a demultiplexer which demultiplexes the decompressed image, and restores the demultiplexed image to the first image and the second image; and
a controller which outputs the restored first and second images alternately.

6. The image providing apparatus as claimed in claim 5, wherein
the combined image is generated by compressing the first image and the second image in a horizontal direction, and multiplexing the compressed first image and the compressed second image; and
the decompressor decompresses the combined image in the horizontal direction.

7. The image providing apparatus as claimed in claim 5 or 6, wherein
the first image comprises one of a left eye image and a right eye image;
the second image comprises another of the left eye image and the right eye image; and
the controller synchronizes a timing of opening and closing a left eye glass and a right eye glass of shutter glasses with a timing of outputting the left eye image and the right eye image, and outputs the left eye image and the right eye image alternately.

8. The image providing apparatus as claimed in one of claims 5 to 7, wherein the decompressor and the demultiplexer are each configured as a single function block, respectively.

9. An image providing system, comprising:
an image generating apparatus which compresses a first image and a second image in a predetermined direction, generates a combined image by multiplexing the compressed first image and the compressed second image, and transmits the combined image;
an image providing apparatus which receives the combined image from the image generating apparatus, decompresses the combined image, restores the decompressed image into a first image and a second image by demultiplexing the decompressed image, and outputs the first image and the second image alternately; and
shutter glasses which are synchronized with a time at which the first image and the second image are alternately output, and alternatively open and close a left eye glass and a right eye glass according to the time at which the first image and the second image are alternatively output by the image providing apparatus.
